# EUROPEAN PATENT SPECIFICATION

(11) **EP 2 570 974 B1**
(45) Date of publication and mention of the grant of the patent: **28.11.2018**
(21) Application number: 11181107.1
(22) Date of filing: 13.09.2011
(51) Int. Cl.: G06N 99/00, G06N 5/00, H04L 12/58

(54) **Automatic crowd sourcing for machine learning in information extraction**
Automatisches Crowdsourcing zum maschinellen Lernen bei der Informationsextraktion
Externalisation ouverte automatique pour machine d'apprentissage dans l'extraction d'informations

(43) Date of publication of application: 20.03.2013
(73) Proprietor: ExB Asset Management GmbH, 81669 München (DE)
(72) Inventor: Assadollahi, Ramin, 81541 Munich (DE); Bordag, Stefan, 81541 Munich (DE)
(74) Representative: MERH-IP Matias Erny Reichl Hoffmann Patentanwälte PartG mbB

(56) References cited:
- US-A1- 2011 055 196
- Shlomo Hershkop: "Behavior-based Email Analysis with Application to Spam Detection", Columbia University , 31 December 2006 (2006-12-31), XP002676586, DOI: 10.1.1.84.2621 Retrieved from the Internet: URL:http://citeseerx.ist.psu.edu/viewdoc/s ummary?doi=10.1.1.84.2621 [retrieved on 2012-05-24]
- BAYARDO R J ET AL: "Data Privacy through Optimal k-Anonymization", DATA ENGINEERING, 2005. ICDE 2005. PROCEEDINGS. 21ST INTERNATIONAL CON FERENCE ON TOKYO, JAPAN 05-08 APRIL 2005, PISCATAWAY, NJ, USA,IEEE, 5 April 2005 (2005-04-05), pages 217-228, XP010788160, DOI: 10.1109/ICDE.2005.42 ISBN: 978-0-7695-2285-2
- GIUSEPPE MANCO ET AL: "Mining categories for emails via clustering and pattern discovery", JOURNAL OF INTELLIGENT INFORMATION SYSTEMS, KLUWER ACADEMIC PUBLISHERS, BO, vol. 30, no. 2, 25 January 2007 (2007-01-25), pages 153-181, XP019574891, ISSN: 1573-7675

## Description

### TECHNICAL FIELD

The present document relates to the field of machine learning and information extraction. In particular, the present document relates to a method and system for machine learning and information extraction using data to which the system does not have direct access to, in order to extract named entities or other information from that data in a flexible and adaptive way.

### BACKGROUND

Current information extraction methods based on machine learning algorithms require the presence of training data. By way of example, training data for the Named Entity Recognition (NER) information extraction task can be in the form of a list of known names, possibly along with lists of titles, official functions, responsibilities, etc. Obtaining such training data is an expensive and fault-prone task. Furthermore, the resulting NER system is not adaptive. If new names are introduced or the language is switched, the correspondingly trained NER system will fail to function correctly. This is due to the fact that the NER system was trained using outdated training data.

The present document addresses the above mentioned shortcomings of current information extraction and machine learning methods. A method is described which allows the provisioning of continuously updated training data. Based on the continuously updated training data, updated data models, e.g. for a NER system, may be determined. Due to the fact that the training data is updated in a continuous manner, it is ensured that the determined data models are kept up-to-date.

Shlomo Hershkop: "Behavior-based Email Analysis with Application to Spam Detection", Columbia University, 31. Dec. 2006, DOI:10.1.1.84.2621, describes a method for automatically classifying an email using patterns which have been learned in a semi autonomous fashion. Bayardo R. J. et al. "Data privacy through Optimal K-anonymization", Data Engineering, 2005, ICDE 2005, Tokyo, Japan, 05-08. April 2005, describes methods for data de-identification.

### SUMMARY

According to an aspect, a method for enabling machine learning from unstructured documents is described. An unstructured document may be an Email message, a text document in a computer readable format and/or a short message server, SMS, message.

The method may comprise analyzing, e.g. at an electronic device, one or more structured databases, thereby providing a mapping between a plurality of referenced character strings and a corresponding plurality of type labels. The electronic device may be a personal computing device, e.g. any one of: a smartphone, a notebook, a desktop PC, a mobile telephone, a tablet PC. The plurality of character strings may be letter strings (e.g. words) and/or number strings (e.g. telephone numbers). The one or more structured databases may be an address book database. In this case, the plurality of type labels may be associated with or may represent one or more of: surname, first name, street name, house number, city name, city code, state name, country name, telephone number, email address. The one or more structured databases may be a calendar database. In this case, the plurality of type labels may be associated with or may represent one or more of: date, time, year, month, day, hour, minute, appointment, meeting, birthday, anniversary. The one or more structured databases may be a task database. In this case, the plurality of type labels may be associated with or may represent one or more of: task, date, time, priority. The one or more structured databases may be a file structure. In this case, the plurality of type labels may be associated with or may represent one or more of: folder name, file name, storage drive, URL.

In general terms, a type label may indicate the function or meaning of a corresponding character string. By way of example, the type label "surname" may indicate that a character string which is associated with the type label "surname" has the function or meaning of a "surname". Consequently, the one or more structured databases at the electronic device may indicate the function or meaning of the referenced character strings stored within the one or more structured databases.

The method may comprise providing, e.g. at the electronic device, a first unstructured document comprising a plurality of unstructured character strings. The unstructured document may differ from a structured document and/or the structured databases in that the unstructured document does not comprise type labels indicating the meaning or function of the character strings comprised within the unstructured document. In other words, the unstructured document comprises a plurality of unstructured character strings, i.e. character strings which are not associated with a type label. It should be noted that in the present patent application, a document which comprises one or more character strings which are not associated with a type label are considered to be unstructured documents. This means that - even though the unstructured document may comprise partially structured information, the unstructured document still comprises data which may be (further) structured.

The method may comprise analyzing the first unstructured document to identify a first character string of the plurality of unstructured character strings which is associated with a first referenced character string of the plurality of referenced character strings. In particular, a first character string of the plurality of unstructured character strings may be identified which corresponds to or which is identical to a first referenced character strings of the plurality of referenced character strings.

The method may comprise associating, within the first unstructured document, a first type label which is mapped to the first referenced character string. In other words, the first character string within the unstructured document may be annotated with the first type label, thereby indicating the meaning or function of the first character string. Typically, a plurality of character strings of the first unstructured document is associated with a corresponding plurality of type labels.

A training set for machine learning may be determined from the first unstructured document comprising the association to the first type label. As such, training data for machine learning can be determined directly from unstructured documents which are available at an electronic device, without the need to manually generate such training data. Furthermore, it is ensured that such training data is up-to-date, as the training data is generated using current unstructured documents and current structured databases available at a user's electronic device. Typically a training set of good quality can be generated by the above mentioned method, due to the fact that there is a high correlation between the structured information and the unstructured information available at a user's electronic device. By way of example, if a particular text string (i.e. the first character string) is identified within an Email (i.e. the first unstructured document), which corresponds to a name (i.e. the first referenced character string) within the address book (i.e. the structured database) of the electronic device, the high correlation between the unstructured and the structured information on a user's electronic device ensures that there is a high probability that the text string is correctly annotated to be a name (i.e. correctly associated with the first type label). As such, the methods outlined in the present document exploit the high correlation between structured and unstructured information available on a user's electronic device in order to generate a high quality training set for machine learning.

It should be noted that the high amount of devices with their personal high-quality data contributing training data to the overall learning process yields the high overall quality of the system and method described herein. The personal, anonymised data of many individual users leads to a high degree of overall recognition rate that may not be achieved by any single data set. The resulting quality in turn may benefit all devices' users.

The method may comprise replacing the first character string within the first unstructured document by the first type label. This means that the first character string itself may be removed from the unstructured document, thereby generating an anonymized document from which information from the one or more structured databases (e.g. personal information of the user of the electronic device) has been removed. In other words, the first character string (which may comprise personal information) may be replaced by the first label (which typically does not comprise personal information, but which (only) provides information regarding the function or meaning of the first character string, which the first label replaces). The training set may then be determined from the first unstructured document comprising the first type label instead of the first character string, i.e. from the anonymized document. In particular, the training set may correspond to the first unstructured document comprising the first type label (possibly without the first character string).

It should be noted that typically the first unstructured document is analyzed using the mapping between the plurality of referenced character strings and the plurality of type labels, thereby annotating (and possibly removing) a plurality of first character strings. Consequently, the resulting training set may comprise a plurality of first type labels, thereby describing the meaning or function of a plurality of first character strings within the first unstructured document.

The training set may be transmitted from the electronic device to a central machine learning server. The central machine learning server may receive a plurality of training sets from a plurality of electronic devices. The method may comprise determining, e.g. at the central machine learning server, a pattern from the one or more training sets. The pattern may be a statistically relevant pattern derived from the one or more training sets. The pattern may also be referred to as a rule, a model or a convention. In particular, the pattern may be a syntactic rule which may define a syntactic relationship between one or more type labels and/or one or more character strings. The server may determine the syntactic rule based on linguistic and/or statistical analysis of the one or more training sets.

The syntactic rule may comprise one or more functional elements which define a function that is performed on the one or more character strings. The function performed on the one or more character strings may e.g. be a similarity function applied to a character string, indicating that the syntactic rule applies to variants of a pre-determined degree of similarity to the character string to which the similarity function is applied. Alternatively or in addition, the function may be an OR function performed on a plurality of character strings, indicating that the syntactic rule applies to any one or more of the plurality of character strings.

The pattern (e.g. the syntactic rule) may be provided to the electronic device, in order to extract information from unstructured documents at the electronic device. As such, a second unstructured document may be provided at the electronic device. The method may comprise applying the pattern (e.g. the syntactic rule) and the plurality of referenced character strings (which may act as seeding entities) to the second unstructured document to determine a new referenced character string and a corresponding type label. The new referenced character string may be stored within the one or more structured databases in accordance to its corresponding type label, thereby yielding an extended plurality of referenced character strings. Subsequently, the second unstructured document may be analyzed in a further iteration of the analyzing step using the extended plurality of referenced character strings as seeding entities, in order to allow for the identification of further referenced character strings from the unstructured document.

In order to ensure a high degree of reliability of the correctness of the extracted information (i.e. of the fact that the new referenced character string corresponds to the type label) a frequency of occurrence of the new referenced character string within the second unstructured document may be determined. Only if the frequency of occurrence or the statistical significance of the co-occurrence frequency exceeds a pre-determined threshold value, the new referenced character string may be stored within the one or more structured databases. As such, the number of occurrences of the new referenced character string within the second unstructured document may be determined. Furthermore, the number of detections of the new referenced character string using the pattern may be determined. The new referenced character string may be stored within the one or more structured databases (only) if the ratio of the number of detections and the number of occurrences exceeds a pre-determined threshold value.

The, method may comprise iterating the above mentioned steps, i.e. notably the determining of the training set at the electronic device, the transmitting of the training set to the central machine learning server, the determining of the pattern at the central machine learning server and the transmitting of the pattern to the electronic device, thereby enabling adaptive machine learning.

It should be noted that the method is not limited to learn Named Entities such as first and last names, etc.. As alluded above, the method applies to the general problem to building up classifiers or patterns. For example, the method may also store incoming documents to a folder structure depending on their content. It thus may comprise determining an organizational rule from the first unstructured document or the training set. The organizational rule may be based on the statistical analysis (e.g. the frequency of occurrence) of the character strings within the first unstructured document. Furthermore, the organizational rule may be based on the name of the folder (i.e. a type label) within which the first unstructured document is stored on the electronic device. The organizational rule may provide a relationship between the statistical analysis of one or more character strings within an unstructured document and a name of a folder within which the unstructured document should be stored. As such, the organization rule enables an electronic device to automatically store new incoming unstructured documents within an appropriate folder of a given folder structure.

According to a further aspect, a system as claimed in independent claim 9 is described.

According to another aspect, a machine learning server configured to determine one or more patterns (e.g. syntactic rules) from a plurality of training sets received from a plurality of devices is described. The plurality of training sets may have been generated by the corresponding plurality of devices as described in the present document.

According to a further aspect, a software program is described. The software program may be stored on a computer-readable medium (which may be tangible or otherwise non-transitory) as instructions that are adapted for execution on a processor and for performing the aspects and features outlined in the present document when carried out on a computing device.

According to another aspect, a storage medium comprising a software program is described. The storage medium may be memory (e.g. RAM, ROM, etc.), optical media, magnetic media and the like. The software program may be adapted for execution on a processor and for performing the aspects and features outlined in the present document when carried out on a computing device.

According to a further aspect, a computer program product is described. The computer program product may comprise executable instructions for performing the aspects and features outlined in the present document when executed on a computing device,

It should be noted that the methods and systems Including its preferred embodiments as outlined in the present patent application may be used stand-alone or in combination with the other methods and systems disclosed in this document. Furthermore, all aspects of the methods and systems outlined in the present patent application may be arbitrarily combined.

In particular, the features of the claims may be combined with one another in an arbitrary manner.

### SHORT DESCRIPTION OF THE FIGURES

The invention is explained below in an exemplary manner with reference to the accompanying drawings, wherein
Fig. 1 illustrates an example flow chart of a method for determining a training set for machine learning at a remote device;
Fig. 2 shows an example flow chart of a method for determining rules or patterns at a central server from a training set;
Fig. 3 shows an example flow chart of a method for performing information extraction at a remote device;
Fig. 4 illustrates a block diagram of an example machine learning system; and
Fig. 5 shows an example block diagram of a method for machine learning.

### DETAILED DESCRIPTION

As outlined above, the present document addresses the shortcomings of current machine learning and information extraction methods. These shortcomings are mainly due to the fact that the underlying training data is limited and outdated.

The methods and systems described in the present document rely on the idea that users of electronic devices (such as mobile phones, smartphones, personal computers, etc.) create, use and constantly refine data by adding items to their address books (for person names, street names, city names), shopping lists (for product names), calendar entries (for time entities), or other similar structures. In other words, users of electronic devices collect significant amounts of data which are available in a structured manner on their devices. Hence, with a multitude of users performing these tasks (i.e. structuring their data) in a variety of languages and sub domains, there is an enormous amount of potential training data for information extraction algorithms to learn from. The use of the structured data of the users would ensure a continuous update of the training data, thereby ensuring that the data models which are derived from the training data are kept up-to-date.

The problem with the stored data at the user's electronic devices is that it is personal data. It is to be assumed that collecting such personal data into a central data storage system would likely violate various (privacy related) laws, depending on the country the user is living in. Furthermore, it is unlikely for most users to consent to the collection of their personal data into a central data storage system.

The present document describes a method and system that can make use of such personal data without having to collect the data in its entirety. In particular, the collected data may be used in an anonymized form. The data may be present in a distributed manner on a plurality of devices such as on personal computers, workstations, tablet PCs, hand-held devices and other physical or virtual devices. The described methods and systems make use of indirect data access to train named entity recognition and relations extraction information extraction tasks. The system may comprise one or more central learning instances for collecting the data, and one or more remote installations on the distributed physical or virtual user devices which comprise potential training data which the users would not like to share directly. The central learning instance and the remote installations may be implemented on different or on the same devices. As such, the methods and systems described in the present document may comprise two parts - a first part on the central learning instances and a second part on the remote devices.

### Remote Part Instance

Typically, the data which is available at a remote device of a user is stored in a structured or in an unstructured manner. Examples for structured knowledge storages are e.g. address books, calendar entries, task entries, etc. In such structured knowledge storages each data entry is associated with a label which specifies the type or the function of the data entry. By way of example, within an address book, a data entry with the associated label "first name" clearly identifies the first name of a person. Similarly, a data entry with the associated label "telephone number" clearly identifies a telephone number, etc. On the other hand, examples for unstructured knowledge storages are file folders, email applications, SMS message stores, etc. These unstructured knowledge storages typically comprise a plurality of unstructured data entities in various languages. This plurality of unstructured data entities could be used as training data, in order to determine syntactic models of such data entities, which could then be used in the context of machine learning and information extraction applications. By way of example, the data entities within the SMS messages stores of German users may be used as training data for determining models or patterns (e.g. typical usage patterns) of the language (e.g. the abbreviations) used by German SMS users.

The problem with the unstructured data entities which are available at the user devices is that the unstructured data entities comprise personal data (such as names, telephone numbers, dates, addresses, etc.) which is typically subjected to data privacy concerns. Furthermore, the unstructured data entities are - by definition - unstructured. In other words, the unstructured data entities do not provide any information with regards to the logical and/or linguistic structure of text comprised within. This means that the unstructured data entities cannot be used as training data for the determination of syntactic models of the language used within the unstructured data entities.

The present document suggests to overcome this problem by combining the fact that a typical remote device comprises structured and unstructured knowledge storages. The information comprised within the structured knowledge storages may be used to annotate the entities comprised within the unstructured knowledge storages. By way of example, on the basis of the information comprised within an address book storage (structured knowledge storage), the address book related information (e.g. names, first names, telephone numbers, street names, city names, etc.) within the entities of the unstructured knowledge storages can be associated with the labels taken from the address book storage. In particular, the personal address book related information within the entities may be annotated with and/or replaced by the labels which are associated to the respective personal information. By way of example, if a personal name ("Smith") is identified within an unstructured Email message and if there is an entry in the address book for a person with the name "Smith", the term "Smith" within the unstructured Email message may be annotated with the label "Name", thereby structuring the unstructured Email message. Furthermore, the term "Smith" may be replaced by the label "Name", thereby removing personal information from the Email message.

As a result of such analysis, the text objects of an unstructured data entity are annotated with labels (e.g. "Name", "First name", "telephone number", "street name", "city name", etc.) which indicate the type of information comprised within the text objects. Furthermore, the text objects may be replaced by the labels, i.e. the text objects comprising personal information may be removed, thereby providing an anonymous data entity which reflects the structure of the initially unstructured data entity, without revealing any personal information. This anonymous and structured data entity may be used as training data, in order to determine a syntactic model of the language used within the (initially) unstructured data entities. It should be noted that the labels may have the function of a place marker. The labels may be implemented as integer values, wherein each integer value may be associated with the particular meaning or function of the label.

The above mentioned process of annotation and of making anonymous may be implemented by a remote part instance on the remote devices. This remote part instance may be divided into two parts, the data providing part, and the application part. The data providing part may perform look-ups in the structured knowledge storages of the user. It may perform these look-ups regularly, event-driven, once or at irregular intervals. Using entries in the structured knowledge storages, the data providing part may process various unstructured knowledge storages of the user. The data providing part may perform this processing of the unstructured knowledge storages regularly, event-driven, once or at irregular intervals. When processing the unstructured data, the data providing part may detect occurrences of data in the structured knowledge storage, replace the data by general-purpose labels and submit the contexts of such occurrences to the central learning instance.

By way of example, the unstructured knowledge storages may be stored email texts, documents, visited and cached websites, etc. The attribute "unstructured" refers to the fact that without further information or annotation within unstructured data it is not possible to know whether the string "John" refers to the name "John" in the address book. Whenever an occurrence of a piece of information from the structured knowledge storages is encountered in the unstructured knowledge storages, a quotation of the context of the occurrence is generated. In this quotation the direct occurrence of the structured piece of information is replaced with a general-purpose label that relates to the type of structured knowledge. By way of example the actual occurrence of the sentence "I saw John Doe driving down 5^{th} Avenue yesterday at around 8 o'clock" would be transformed into "I saw <firstname> <lastname> driving down <streetname> yesterday at around <timeofday>" by consulting the structured knowledge storages such as an address book and a calendar application on the remote device. These quotations may be sent to one or more central learning instances. Since the quotations do not contain any personal information, it is likely that that the users will consent to having such quotations sent to the central learning instances automatically.

The data providing part may also be configured to detect data organization events which are performed by the user. Contextual information about when such data organization events are performed may be sent to the one or more central learning instances. By way of example, if the user moves an email into a folder which is labeled "contracts", the data providing part could generate contextual information about the distribution of the words within the email, about the time of arrival of the email, or any other conceivable feature. These pieces of contextual information would be filtered to not contain personal information, such as real names, and would be sent to the central learning instance.

The application part of the remote part instance may be responsible for performing a first part of the information extraction. A further part of the information extraction may be performed on the central learning instances and is described further below. The application part on the remote devices may regularly fetch or receive update packages from one or more central learning instances. It may use the information from the structured information storages as described in the previous paragraphs, as well as rules or patterns obtained from the central information extraction part. Using these two sources of information, the application part may detect named entity instances such as names, product names, calendar entries, etc.. Using these two sources of information, the application part may further detect whether data organization events could be generated.

The name recognition part will detect exact matches of elements from the structured storage. Depending on the quality of the rules or patterns obtained from the central learning instance it may also detect non-exact matches of elements from the structured storage (by way of example misspelled elements or abbreviated variants). Depending on the quality of the rules it may also detect entirely new instances of structured information in unstructured data storage. By way of example, after several different data providing parts sent quotations to a central learning instance of the form "... saw <firstname> <lastname> driving {down/up} <streetname> ...", the name recognition part may generalize a rule that states that if the context of some particular string of characters in unstructured data matches "... saw X Y driving ..." that X is likely a first name and that Y is likely a last name.

The application part may merely use the non-exact matching rules to detect names that should be replaced with labels before sending further quotations to the central learning instance. However, the application part may also provide a service to the user of the remote physical or virtual device of automatically enriching his structured data storages. By way of example, if a user has a contact in his address book with a name and an email address and the application part detects a string that, according to the detection rule received from the central learning instance, is likely a phone number in the vicinity of that name, the application part may add this phone number to the address book as the probable phone number of that contact. Since such non-exact matches never have perfect accuracy, the application part may also provide the context from which it drew the conclusion, in case the particular structured storage implementation supports storing notes or other unspecified information.

Furthermore, the application part may comprise a data organization part which organizes the data of the user. By way of example, the application part may detect the arrival of a new email message on the device. The application part may then detect that the features of that mail, such as word frequency distribution of that email is very similar to the word distributions of the emails in a folder "contracts". The word distributions of the email in folders with the title "contracts" may have been provided to the application part as an organizational rule determined by a central machine learning server. Based on this analysis, the application part may put the new email into the folder "contracts".

As such, the remote device may be provided with an application part which uses the models, rules or patterns determined by the central learning instance and the structured information available at the remote device. The application part may use this information in order to analyze the unstructured data entities available at the remote device and to thereby structure the unstructured data entities or to thereby generate further structured information at the remote device. By way of example, the application part may use the syntactic models and the structured information comprised within an address book, in order to automatically extract an email address of person listed in the address book from an incoming Email message. In a further example, the application part may use the syntactic models and the structured information available at the remote device to automatically assign unstructured entities to appropriate folders, thereby creating structured information.

### Central Learning instance

The central learning part of the method on the central learning instances may comprise two parts, a first part being the data collection part and a second part being the analysis part.

The data collection part may collect and combine several different types of data from multiple sources, e.g. multiple remote devices. The data collection part may use a web crawler or other technology to collect freely available data in the internet. The data collection part may use a pre-determined list of sources from which data is collected. The data collection part may receive quotations (i.e. training sets comprising annotated unstructured documents) from various installations of remote parts on various remote devices. The data collection part may also receive named types of information from other central learning instances.

Using the collected information, the data collection part may produce several types of data storages. The data collection part may produce a storage for known entities including their type. By way of example such known entities may be names (of celebrities), addresses, events, product names, or any other. Alternatively or in addition, the data collection part produces a collection of unstructured data. By way of example this may be stored websites, newsgroup contents, news feeds, documents, or any other. Alternatively or in addition, the data collection part may produce a collection of quotations submitted by the remote instances. The data collection part may be configured to remove double entries within the one or more storages, to provide frequencies of occurrence of the collected double entries. Furthermore, the data collection part may comprise mechanisms in order to prevent potentially malicious content from being considered further.

The analysis part of the central learning part may use the data provided by the data collection part to perform e.g. the following tasks: a first task to produce rules, patterns or models; and a second task to extract further known entities or quotations.

Patterns such as syntactic models may be produced by using the data provided by the data collection part. The produced patterns can be used to detect previously unknown entities or data hierarchies. In order to produce appropriate patterns, methods from statistics and natural language processing may be used to generalize from singular occurrences to general-purpose rules or patterns. By way of example, the analysis part may identify several occurrences of quotations such as the following: " ...saw <firstname> driving down the <streetname> ..." or"... watched <firstname> walking up the street..." or "... saw Mr. <lastname> driving down the street ...". From this training data, the analysis part may generate the single rule "... saw[OR SIMILAR] X[=<firstname>] [Y[=<lastname>]] driving[OR SIMILAR] down[OR up] the street[OR <streetname>] ...". The rules may comprise functional elements, such as the functional element [SIMILAR] which refers to an assumed module that returns a plurality of words which are possibly semantically related to the word that the functional element is used on. For this purpose, any method for computing semantic similarity may be used. By way of example, such methods for computing semantic similarity may include distributional semantics based methods or thesaurus based methods. The functional element [OR] refers to the fact that either variants are acceptable when applying the rule. The functional element [=<label>] refers to a functionality that recognizes the element X (or Y) encountered at the indicated position to be of the type <label>.

The rules or pattern producing part can also use statistics in order to determine that certain words of the documents within a given folder appear to be typical for the documents within the given folder. By way of example, if several users place emails into a folder named "contracts" and most of these emails contained words such as "hire", "payment" and "agreement", a rule could be formulated that states that if the distribution of the words in a new email is similar to the one observed from the users so far, that new emails can be put into a folder named "contracts" automatically.

The rules producing part may also determine that some folders appear to have a similar function. By way of example, some users might call a folder "contracts", some others "contract" and some others "work". The central learning instance could use similarity metrics to determine that all three folders exhibit similar word usage statistics and collapse the various classes into a single class with several different possible labels.

The determination of rules, i.e. using machine learning to train a machine to recognize named entities, may involve several different techniques from different fields of natural language processing. One of the tasks is to identify and produce the features for the machine learning to use and to differentiate the various occurrences. Hence, from the example sentence "John and Mark went down to the grocery", where the names are identified and replaced by labels to "<Name> and <Name> went down to the grocery" many features can be extracted which allow to learn and formulate rules how to recognize names.

For example, part of speech labeling is used to acquire information about the word classes of the words surrounding known occurrences of names. Hence, the sentence can be represented as "<Name> JUNCT <Name> VERB PREP PREP DET NOUN". Lemmatization may be used to reduce diversity. Morphology analysis may be used to extract the morphological markers present in the data. Furthermore, one can additionally obtain and use information regarding the tense of a verb, e.g. that the verb "went" is in past tense. Semantic analysis may result in several semantic word classes to be added to the annotation of the sentence such as "movement verbs" for down. A correlation analysis may result indicating that whenever the structure "X JUNCT Y VERB [movement, past tense]" occurs, that both X and Y must be two distinct names. Not all of such features can be extracted in such a linguistically clean way in a fully automatic setup, but close approximations can usually be achieved. The resulting rule may be expressed as a sequence of variables (representing a character string, e.g. a name) and functional elements. The actual labels which are used to identify the extracted features are typically not relevant (abstract numbers as labels may be sufficient). Another method for determining one or more patterns from a training set comprising annotated unstructured documents is described e.g. in Rens Bod, 2006. Unsupervised Parsing with U-DOP. Proceedings CoNLL 2006, New York, which is incorporated by reference. Furthermore it is possible to use classification methods such as Bayes classificators, k-nn classificators, support vector machines or any other classificator algorithms (e.g. string classificators) to train a classifier in order to identify occurrences of names using the rich feature representation produced beforehand.

The actual machine learning may occur as a sequence of several steps, arranged e.g. in an iterative process. For example, for non-anonymized data it may be assumed that names and other structural information is arranged within a text corpus according to certain conventions, i.e. syntactic rules. A possible rule may be that complete names are typically arranged by writing first the title, then the first name and then the last name. Assuming the first name / last name convention/rule, machine learning may be performed on a text corpus (i.e. on training data) using the following iteration, which is based on a pendulum algorithm described in Quasthoff, U., Biemann, C., Wolff, C. (2002): Named Entity Learning and Verification: Expectation Maximisation in Large Corpora, Proceedings of CoNNL-2002, Taipei, Taiwan, which is incorporated by reference: The learning algorithm may start with 20 known first names and 20 known last names (so called "seed" names). If the algorithm encounters a known name such as "John" right next to (i.e. right prior to) an unknown string such as "Miller", the machine learning algorithm may assume "Miller" to be a last name. To verify this assumption, the algorithm may search through the text corpus for other occurrences of the string "Miller" with the same or other known names in front of it. If a certain minimum amount of occurrences of the term "Miller" in conjunction with a known first name can be found, the term "Miller" is accepted as a known last name. As such, the machine learning algorithm may start a further iteration through the text corpus with 20 known first names and 21 known last names (i.e. an additional last name "Miller"). In other words, the machine learning algorithm may start a further iteration by applying the convention / rule to the text corpus with an increased set of seeding names, thereby increasing the possibilities for identifying further names. Typically, on a large corpus and starting with just 20 seed names, hundreds of thousands of names can be found during 20 iterations with a precision of more than 96%.

In view of the significant exchange of data between the remote instances and the central learning instance(s), the available bandwidth between the central learning instances and the remote instances may become a limiting factor. Hence, the goal of the rule producing part is to produce a relatively small number of rules that can be sent to the remote devices where they can be used to recognize further entities. The number of rules which are sent to the remote instances may be limited in amount, in order to contain only the most valuable rules. The value of a rule may depend on the absolute or relative number of cases for which a rule is applicable (frequency of use), or on the ratio of correct labels of a specific type (e.g. names) they recognize versus the words incorrectly recognized as labels of this type (e.g. names), or any other quality or quantity based measure.

### Iteration

The remote part instances and the central learning instance(s) of the distributed machine learning system described herein may continue to exchange information with each other in an iterative manner. Thus, the more information is shared between the two instances, the more sound the statistical background for generalizing rules and the better the recognition rates of the distributed machine learning system. The incentive for users of remote devices to provide (filtered) data to the central learning instance(s) may be created by providing the users of remote devices with updates to their application part of the learning method which in turn increases the recognition rate of their device which in turn makes the device more valuable both to the user and to the central learning instance.

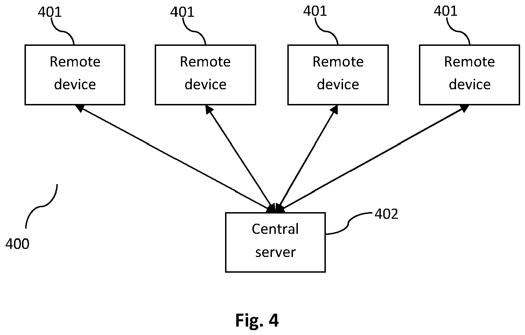

Fig. 4 illustrates an example block diagram of a network scenario 400, which may use the machine learning schemes outlined in the present document. A plurality of remote devices 401 (e.g. mobile telephones, smartphones, tablet PCs, portable computers, laptops, desktop computers, etc.) may cooperate with one or more central servers 402. The plurality of remote devices 401 may provide training data to a central server 402. The central server 402 may use the training data to determine one or more patterns or rules (e.g. syntactic rules), organizational rules or conventions. These conventions may describe the structure of the training data. The rules or conventions determined by the central server 402 and/or other pre-determined rules may be provided to one or more of the plurality of remote devices 401. As such, a remote device 401 may use the rules to extract additional structured information from unstructured information.

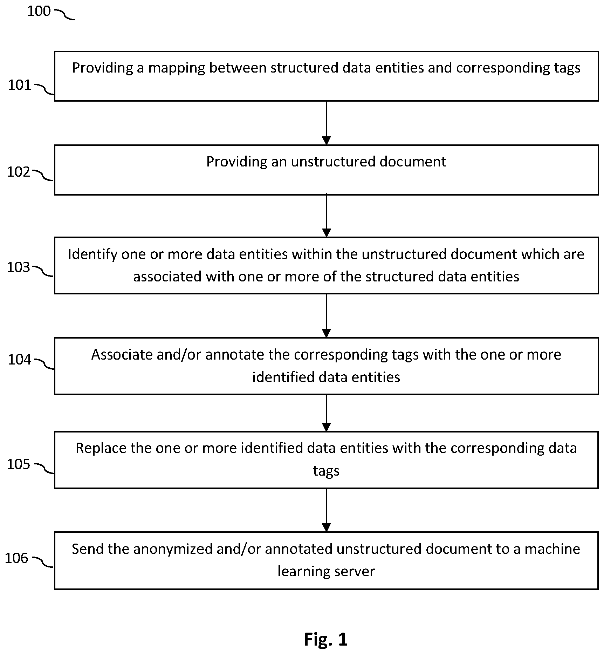

Fig. 1 illustrates an embodiment of a method 100 for generating training data at a remote device 401. The remote device 401 may comprise structured data, i.e. data which is associated with a corresponding type label. The type label may indicate the type and/or the function of the data to which it is associated. An example for such structured data is data comprised within an address book database, a calendar database or a task database. The data may be character strings (e.g. a string of text and/or a string of numbers) and the associated type labels may indicate the meaning or the function of the character string (e.g. first name, last name, private telephone number, etc.). As such, the method 100 may comprise the step of providing a mapping between structured data entities (e.g. referenced character stings) and corresponding type labels. The mapping may be taken from structured databases comprised within the remote device 401 (e.g. an address book database).

In addition, the remote device 401 may dispose of one or more unstructured or unstructured data, i.e. data which is not associated with corresponding type labels. This means that without further knowledge, unstructured data does not provide any information with regards to its function or meaning. Unstructured data typically comprises character strings which are not associated with a type label indicating the meaning or function of the character string. Examples for such unstructured data are e.g. Email messages, SMS messages or other text documents. As such, the method 100 may proceed in providing one or more unstructured documents (step 102).

The remote device 401 (notably the data providing part of the remote part instance) may analyze the unstructured data and identify therein one or more data entities (e.g. one or more character strings) which correspond to one or more structured data entities (i.e. data entities having a type label associated therewith) (step 103). The method 100 may then proceed in associating the one or more identified data entities with the type labels of the corresponding one or more structured data entities (step 104). As a result, several data entities within the unstructured data are annotated or associated with type labels, thereby structuring the unstructured data. In addition, the identified data entities may be removed from the original unstructured data (step 105), thereby removing personal data from the unstructured data, i.e. thereby annonymizing the unstructured data. Finally, the annotated unstructured data (which has possibly been annonymized) is sent as training data to a central server 402 (step 106).

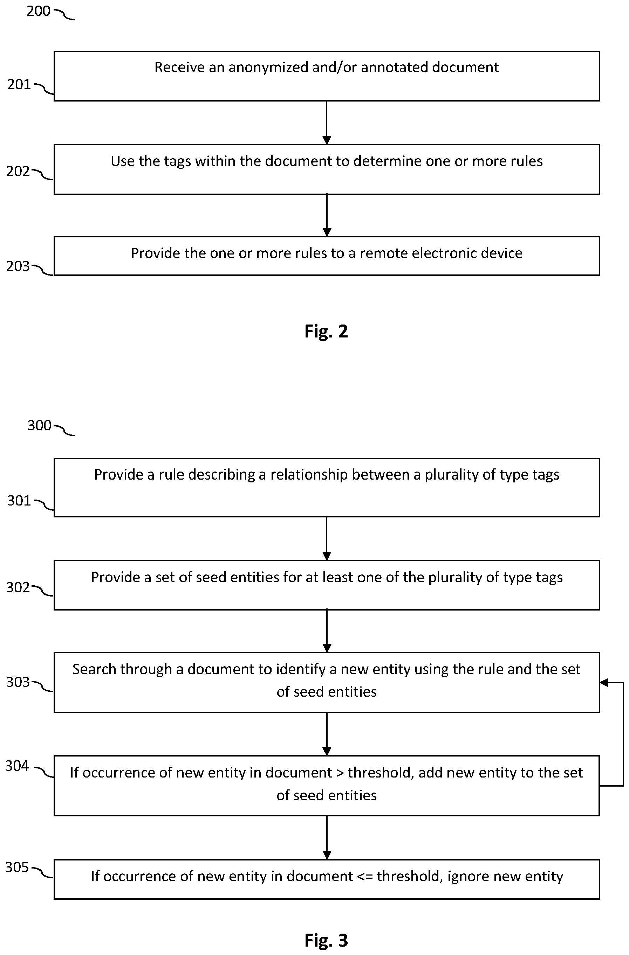

The training data generated at the remote devices 401 (or other training data) may be used by the central server 402 to determine one or more rules, which may subsequently be used to further analyze unstructured data, in order to generate new knowledge and/or to automatically organize unstructured data. A method 200 for determining such a rule (e.g. a syntactic rule) based on training data is described in Fig. 2. In step 201, the central server 402 is provided with (possibly annonymized) annotated training data. The training data may have been generated by the method 100 outlined in Fig. 1. The training data comprises a plurality of type labels which identifies data entities of a certain function or meaning within the training data. By way of example, the training data comprises a plurality of type labels identifying the position of first names and last names within the training data. Using various linguistic and/or statistical approaches, linguistic and/or syntactic rules may be determined from the training data. By way of example, it may be determined by analyzing the frequencies of occurrences of the first names and the last names, that first names are most frequently placed directly before last names. As a result, a syntactic rule may consist in stating that a first name is directly followed by a last name. In more general terms, a rule may describe the relationship between a plurality of type labels. The relationship may indicate the relative position of the type labels with respect to each other. Furthermore, the rule may describe an operation which may be performed on the data entity (of the particular type label). Possible operations may e.g. be the functional elements outlined above.

Finally, the new rules may be provided to one or more of the plurality of remote devices 401 (step 203). As such, the remote devices 401 may provide training data to the central server 402, and in return, may be provided with updated rules which better represent the structure of the training data provided by the remote devices 401. This means that by iterating the methods of Figs. 1 and 2, an adaptive method for machine learning can be provided.

The rules which have been determined e.g. using the method of Fig. 2 may be used to extract additional structured information from unstructured data, and to thereby populate the structured databases comprised within remote devices 401. Such a method 300 for data extraction is illustrated in Fig. 3. The method 300 may e.g. be executed on a remote device 401.

Using one or more rules describing a relationship between a plurality of type labels and/or operations performed on data entities of a particular type label, additional structured data may be generated from unstructured documents. The one or more rules may be received at the remote device 401 (step 301). Furthermore, a set of seed entities may be provided for one or more of a plurality of type labels (step 302). The seed entities may be taken from the structured data already available at the remote device 401. By way of example, the mappings between data entities (e.g. character strings) and the type labels taken from the structured databases such as the address book database, may be used to determine the seed entities (e.g. a set of known first names, last names, telephone numbers, etc.).

Using the rule and the set of seed entities, a new data entity of a first type label may be determined (step 303) within unstructured data. For this purpose, a seed entity of a second type label may be determined within the unstructured data. The rule may indicate a relationship between the first type label and the second type label (e.g. that the first name (first type label) directly precedes the second type label (second type label)). If the seed entity of the second type label is identified within the unstructured data, the rule may be used to determine the new data entity of the first type label. By way of example, if a known first name is identified within the unstructured document, then the character string following the known first name may be identified as a new data entity of the first type label (last name).

In order to prevent the false detection of new entities, the detection of new entities may be submitted to the analysis of frequency of occurrence of the new entities (steps 304 and 305). Only if the frequency of occurrence of the new data entity exceeds a pre-determined threshold, the new entity is retained. The frequency of occurrence may indicate an absolute or relative number of detections of the new entity within the unstructured data using step 303. Alternatively or in addition, the frequency of occurrence may indicate the fraction of the number of times that the new data entity is identified using the rule and the seed entity over the number of times that another data entity is identified using the rule and the seed entity.

If a new data entity is retained, the new data entity and the corresponding type label may be stored within a structured database of the remote device 401 (e.g. within the address book). Alternatively or in addition, the new data entity may be added to the set of seed entities. Subsequently, a new iteration of the information extraction algorithm (notably step 303, and steps 304 and 305) may be performed using the extended set of seed entities.

Fig. 5 illustrates an example iterative method 500 for machine learning. In particular, Fig. 5 shows two example iterations n and n+1 of the method 500. At the client (e.g. a user's electronic device), annotated user texts 513 are generated from user texts 511 (unstructured documents) and an address book 512 (structured database). The annotated (and anonymized) user texts 513 are provided to the server in order to generate improved patterns 504. The improved patterns 504 may be generated from the annotated user texts 513 alone. In addition, the server may consider crawler data 501 (e.g. web pages, etc.) and name lists 502 to generate basic patterns 503 which are further improved by considering the annotated user texts 513. The improved patterns 504 are provided to the client. The client makes use of the improved patterns 504, in order to extract information from user texts 511 and to thereby increase the amount of structured information (contained within the address book 512). As such, an improved extractor 514 is provided, thereby increasing the amount of structured data within the address book 512. The extended address book 512 may be used in a following iteration n+1 to generated improved annotated user texts 513 from the user texts 511 available at the client.

In summary, the invention relates to the technical fields of information extraction and machine learning. In particular, the invention relates to a method and a system for letting a machine learn how to extract information from data that is not directly available to the machine. A distinction between remote instances and central instances is described. The remote instances collect and select instances of data to be sent to the central instances. The central instances collect data from remote instances and from other sources. The central instances generalize rules on how to extract information from the data submitted by the remote instances and distribute the learned knowledge to the remote devices whose information extraction capabilities grow proportionally to the data they share with the central learning instances. The method is described in relation to subtasks of information extraction such as named entity recognition and automatic class finding and labeling.

The described methods and systems may be implemented on computer systems, such as servers, work stations, desktop PCs, virtualized desktops, laptops, tablet PCs, and handheld or wireless devices, such as mobile phones, smart phones, PDAs, etc..

The systems and methods described in the present document are not limited to the disclosed exemplary scenarios. Other use cases can benefit from the invention as well. This written description uses examples to disclose the invention, including the best mode, and also to enable any person skilled In the art to make and use the invention. While the invention has been described in terms of various specific embodiments, those skilled in the art will recognize that the invention can be practiced with modification within the scope of the claims. Especially, mutually non-exclusive features of the embodiments described above may be combined with each other. The patentable scope of the invention is defined by the claims, and may include other examples that occur to those skilled in the art.

## Claims

1. A method for enabling machine learning from unstructured documents, the method comprising
- analyzing, at an electronic device (401), one or more structured databases to provide a mapping (101) between a plurality of referenced character strings and a corresponding plurality of type labels; wherein a type label indicates the function or meaning of a corresponding referenced character string; wherein the one or more structured databases are any of: an address book database, with the plurality of type labels representing one or more of: surname, first name, street name, house number, city name, city code, state name, country name, telephone number, email address; a calendar database, with the plurality of type labels representing one or more of: date, time, year, month, day, hour, minute, appointment, meeting, birthday, anniversary; a task database, with the plurality of type labels representing one or more of: task, date, time, priority; or a file structure, with the plurality of type labels representing one or more of: folder name, file name, storage drive, URL;
- providing (102), at the electronic device (401), a first unstructured document comprising a plurality of unstructured character strings;
- analyzing, at the electronic device, the first unstructured document to identify (103) a first character string of the plurality of unstructured character strings which is associated with a first referenced character string of the plurality of referenced character strings;
- annotating (104), at the electronic device, within the first unstructured document, the first character string with a first type label which is mapped to the first referenced character string, thereby Indicating the meaning or function of the first character string;
- replacing (105), at the electronic device, the first character string within the first unstructured document by the first type label;
- determining, at the electronic device, a training set for machine learning as the first unstructured document comprising the first type label instead of the first character string;
- determining (202), at a central machine learning server, a pattern from the training set; wherein the pattern is a syntactic rule defining a syntactic relationship between the first type label and the first character string;
- providing, at the electronic device, a second unstructured document;
- applying(303), at the electronic device, the pattern and the plurality of referenced character strings to the second unstructured document to determine a new referenced character string and a corresponding type label; and
- storing, at the electronic device, the new referenced character string within the one or more structured databases in accordance to its corresponding type label, thereby yielding an extended plurality of referenced character strings.

2. The method of claim 1, further comprising:
- transmitting (106) the training set to the central machine learning server;
- determining (202) the pattern at the central machine learning server; and
- transmitting (301) the pattern to the electronic device (401).

3. The method of any previous claim, wherein the function performed on the one or more character strings is any of:
- a similarity function applied to a character string, Indicating that the syntactic rule applies to variants of a pre-determined degree of similarity to the character string to which the similarity function Is applied; and
- an OR function performed on a plurality of character strings, indicating that the syntactic rule applies to any one or more of the plurality of character strings.

4. The method of any previous claim, further comprising
- determining a frequency of occurrence of the new referenced character string within the second unstructured document;
- storing the new referenced character string within the one or more structured databases only if the frequency of occurrence exceeds a pre-determined threshold value.

5. The method of any of previous claim, further comprising
- repeating the applying step using the extended plurality of referenced character strings.

6. The method of any previous claim, further comprising:
- iterating the determining of the training set at the electronic device (401), the transmitting of the training set to the central machine learning server (402), the determining of the pattern at the central machine learning server (403) and the transmitting of the pattern to the electronic device (404), thereby enabling adaptive machine learning.

7. The method of any previous claim, wherein the electronic device is a personal computing device, e.g. any one of: a smartphone, a notebook, a desktop PC, a mobile telephone, a tablet PC,

8. The method of any previous claim, wherein the first unstructured document is any one or more of:
- an Email message;
- a text document in a computer readable format;
- a short message server, SMS, message.

9. A system (400) configured for enabling machine learning from unstructured documents, the system (400) comprising an electronic device (401) configured to
- analyze (101) one or more structured databases to provide a mapping between a plurality of referenced character strings and a corresponding plurality of type labels; wherein a type label indicates the function or meaning of a corresponding referenced character string; wherein the one or more structured databases are any of: an address book database, with the plurality of type labels representing one or more of: surname, first name, street name, house number, city name, city code, state name, country name, telephone number, email address; a calendar database, with the plurality of type labels representing one or more of: date, time, year, month, day, hour, minute, appointment, meeting, birthday, anniversary; a task database, with the plurality of type labels representing one or more of: task, date, time, priority; or a file structure, with the plurality of type labels representing one or more of: folder name, file name, storage drive, URL;
- provide (102) a first unstructured document comprising a plurality of unstructured character strings;
- analyze (103) the first unstructured document to identify a first plurality of character strings of the plurality of unstructured character strings which is associated with a first plurality of referenced character strings of the plurality of referenced character strings;
- annotate (104), within the first unstructured document, the first character string with a first type label which is mapped to the first referenced character string, thereby indicating the meaning or function of the first character string;
- replace (105) the first character string within the first unstructured document by the first type label;
- determine a training set for machine learning as the first unstructured document comprising the first type label instead of the first character string;
- transmit the training set to a central machine learning server (402) to determine (202) a pattern from the training set; wherein the pattern is a syntactic rule defining a syntactic relationship between the frist type label and the first character string;
- provide a second unstructured document;
- apply (303) the pattern and the plurality of referenced character strings to the second unstructured document to determine a new referenced character string and a corresponding type label; and
- store the new referenced character string within the one or more structured databases in accordance to its corresponding type label, thereby yielding an extended plurality of referenced character strings.

10. The system of claim 9, further comprising
- a plurality of electronic devices (401) configured to determined a corresponding plurality of training sets, and configured to transmit the plurality of training sets to the central machine learning server (402);
- the central machine learning server (402) configured to determine one or more patterns from the plurality of training sets.

## Patentansprüche

1. Verfahren zum Ermöglichen des maschinellen Lernens aus nicht strukturierten Dokumenten, wobei das Verfahren Folgendes umfasst:
- Analysieren in einer elektronischen Vorrichtung (401) einer oder mehrerer strukturierter Datenbanken, um eine Abbildung (101) zwischen mehreren referenzierten Zeichenketten und einer entsprechenden Mehrzahl von Typetiketten zu schaffen; wobei ein Typetikett die Funktion oder Bedeutung einer entsprechenden referenzierten Zeichenkette angibt; wobei die eine oder die mehreren strukturierten Datenbanken irgendwelche der Folgenden sind: eine Adressbuch-Datenbank, wobei die mehreren Typetiketten eines oder mehrere der folgenden Elemente repräsentieren: Vorname, Name, Straßenname, Hausnummer, Name der Stadt, Postleitzahl, Name des Staats, Name des Landes, Telefonnummer, E-Mail-Adresse; eine Kalender-Datenbank, wobei die mehreren Typetiketten eines oder mehrere der folgenden Elemente repräsentieren: Datum, Uhrzeit, Jahr, Monat, Tag, Stunde, Minute, Termin, Sitzung, Geburtstag, Jahrestag; eine Aufgaben-Datenbank, wobei die mehreren Typetiketten eines oder mehrere der folgenden Elemente repräsentieren: Aufgabe, Datum, Uhrzeit, Priorität; oder eine Dateistruktur, wobei die mehreren Typetiketten eines oder mehrere der folgenden Elemente repräsentieren: Ordnername, Dateiname, Speicherlaufwerk, URL;
- Bereitstellen (102) in der elektronischen Vorrichtung (401) eines ersten nicht strukturierten Dokuments, das mehrere nicht strukturierte Zeichenketten enthält;
- Analysieren in der elektronischen Vorrichtung des ersten nicht strukturierten Dokuments, um eine erste Zeichenkette der mehreren nicht strukturierten Zeichenketten zu identifizieren (103), die einer ersten referenzierten Zeichenkette der mehreren referenzierten Zeichenketten zugeordnet ist;
- Kennzeichnen (104) in der elektronischen Vorrichtung der ersten Zeichenkette in dem ersten nicht strukturierten Dokument mittels eines ersten Typetiketts, das auf die erste referenzierte Zeichenkette abgebildet wird, wodurch die Bedeutung oder Funktion der ersten Zeichenkette angegeben wird;
- Ersetzen (105) in der elektronischen Vorrichtung der ersten Zeichenkette in dem ersten nicht strukturierten Dokument durch das erste Typetikett;
- Bestimmen in der elektronischen Vorrichtung einer Übungsmenge für maschinelles Lernen als das erste nicht strukturierte Dokument, das das erste Typetikett statt der ersten Zeichenkette enthält;
- Bestimmen (202) bei einem zentralen Server für maschinelles Lernen eines Musters aus der Übungsmenge; wobei das Muster eine syntaktische Regel ist, die eine syntaktische Beziehung zwischen dem ersten Typetikett und der ersten Zeichenkette definiert;
- Bereitstellen in der elektronischen Vorrichtung eines zweiten nicht strukturierten Dokuments;
- Anwenden (303) in der elektronischen Vorrichtung des Musters und der mehreren referenzierten Zeichenketten auf das zweite nicht strukturierte Dokument, um eine neue referenzierte Zeichenkette und ein entsprechendes Typetikett zu bestimmen; und
- Speichern in der elektronischen Vorrichtung der neuen referenzierten Zeichenkette in der einen oder den mehreren strukturierten Datenbanken in Übereinstimmung mit ihrem entsprechenden Typetikett, woraus sich eine erweiterte Mehrzahl referenzierter Zeichenketten ergibt.

2. Verfahren Anspruch 1, dass ferner Folgendes umfasst:
- Senden (106) der Übungsmenge zu dem zentralen Server für maschinelles Lernen;
- Bestimmen (202) des Musters bei dem zentralen Server für maschinelles Lernen; und
- Senden (301) des Musters zu der elektronischen Vorrichtung (401).

3. Verfahren nach einem vorhergehenden Anspruch, wobei die Funktion, die an der einen oder den mehreren Zeichenketten ausgeführt wird, eine der Folgenden ist:
- eine Ähnlichkeitsfunktion, die auf eine Zeichenkette angewendet wird und angibt, dass die syntaktische Regel auf Varianten angewendet wird, die einen vorgegebenen Ähnlichkeitsgrad mit der Zeichenkette, auf die die Ähnlichkeitsfunktion angewendet wird, haben; und
- eine ODER-Funktion, die an mehreren Zeichenketten ausgeführt wird und angibt, dass die syntaktische Regel auf eine oder mehrere der mehreren Zeichenketten angewendet wird.

4. Verfahren nach einem vorhergehenden Anspruch, das ferner Folgendes umfasst:
- Bestimmen einer Auftrittshäufigkeit der neuen referenzierten Zeichenkette in dem zweiten nicht strukturierten Dokument;
- Speichern der neuen referenzierten Zeichenkette in der einen oder den mehreren strukturierten Datenbanken nur dann, wenn die Auftrittshäufigkeit einen vorgegebenen Schwellenwert überschreitet.

5. Verfahren nach einem vorhergehenden Anspruch, das ferner Folgendes umfasst:
- Wiederholen des Anwendungsschrittes unter Verwendung der erweiterten Mehrzahl referenzierter Zeichenketten.

6. Verfahren nach einem vorhergehenden Anspruch, das ferner Folgendes umfasst:
- Iterieren (401) des Bestimmens der Übungsmenge in der elektronischen Vorrichtung, des Sendens (402) der Übungsmenge zu dem zentralen Server für maschinelles Lernen, des Bestimmens (403) des Musters bei dem zentralen Server für maschinelles Lernen und des Sendens (404) des Musters zu der elektronischen Vorrichtung, um dadurch ein adaptives maschinelles Lernen zu ermöglichen.

7. Verfahren nach einem vorhergehenden Anspruch, wobei die elektronische Vorrichtung eine persönliche Rechenvorrichtung ist, z. B. eines der folgenden Geräte: Smartphone, Notebook, Desktop-Computer, Mobiltelefon, Tablet-Computer.

8. Verfahren nach einem vorhergehenden Anspruch, wobei das erste nicht strukturierte Dokument eines oder mehrere der folgenden Dokumente enthält:
- E-Mail-Nachricht;
- Textdokument in einem computerlesbaren Format;
- Kurznachrichtendienst-Nachricht, SMS-Nachricht.

9. System (400), das konfiguriert ist, maschinelles Lernen aus nicht strukturierten Dokumenten zu ermöglichen, wobei das System (400) eine elektronische Vorrichtung (401) umfasst, die konfiguriert ist zum:
- Analysieren (101) einer oder mehrerer strukturierter Datenbanken, um eine Abbildung zwischen mehreren referenzierten Zeichenketten und einer entsprechenden Mehrzahl von Typetiketten zu schaffen; wobei ein Typetikett die Funktion oder Bedeutung einer entsprechenden referenzierten Zeichenkette angibt; wobei die eine oder die mehreren strukturierten Datenbanken irgendwelche der Folgenden sind: eine Adressbuch-Datenbank, wobei die mehreren Typetiketten eines oder mehrere der folgenden Elemente repräsentieren: Vorname, Name, Straßenname, Hausnummer, Name der Stadt, Postleitzahl, Name des Staats, Name des Landes, Telefonnummer, E-Mail-Adresse; eine Kalender-Datenbank, wobei die mehrere Typetiketten eines oder mehrere der folgenden Elemente repräsentieren: Datum, Uhrzeit, Jahr, Monat, Tag, Stunde, Minute, Treffen, Sitzung, Geburtstag, Jahrestag; eine Aufgaben-Datenbank, wobei die mehreren Typetiketten eines oder mehrere der folgenden Elemente repräsentieren: Aufgabe, Datum, Zeit, Priorität; oder eine Dateistruktur, wobei die mehreren Typetiketten eines oder mehrere der folgenden Elemente repräsentieren: Ordnername, Dateiname, Speicherlaufwerk, URL;
- Bereitstellen (102) eines ersten nicht strukturierten Dokuments, das mehrere nicht strukturierte Zeichenketten enthält;
- Analysieren (103) des ersten nicht strukturierten Dokuments, um eine erste Mehrzahl von Zeichenketten der mehreren nicht strukturierten Zeichenketten zu identifizieren, die einer ersten Mehrzahl referenzierter Zeichenketten der mehreren referenzierten Zeichenketten zugeordnet ist;
- Kennzeichnen (104) in dem ersten nicht strukturierten Dokument der ersten Zeichenkette mit einem ersten Typetikett, das auf die erste referenzierte Zeichenkette abgebildet wird, wodurch die Bedeutung oder Funktion der ersten Zeichen kette angegeben wird;
- Ersetzen (105) der ersten Zeichenkette in dem ersten nicht strukturierten Dokument durch das erste Typetikett;
- Bestimmen einer Übungsmenge für maschinelles Lernen als das erste nicht strukturierte Dokument, die das erste Typetikett statt der ersten Zeichenkette enthält;
- Senden (402) der Übungsmenge zu dem zentralen Server für maschinelles Lernen, um aus der Übungsmenge ein Muster zu bestimmen (202); wobei das Muster eine syntaktische Regel ist, die eine syntaktische Beziehung zwischen dem ersten Typetikett und der ersten Zeichenkette definiert;
- Bereitstellen eines zweiten nicht strukturierten Dokuments;
- Anwenden (303) des Musters und der mehreren referenzierten Zeichenketten auf das zweite nicht strukturierte Dokument, um eine neue referenzierte Zeichenkette und ein entsprechendes Typetikett zu bestimmen; und
- Speichern der neuen referenzierten Zeichenkette in der einen oder den mehreren strukturierten Datenbanken in Übereinstimmung mit ihrem entsprechenden Typetikett, wodurch sich eine erweiterte Mehrzahl der referenzierten Zeichen ketten ergibt.

10. System nach Anspruch 9, das ferner Folgendes umfasst:
- mehrere elektronische Vorrichtungen (401), die konfiguriert sind, eine entsprechende Mehrzahl von Übungsmengen zu bestimmen, und konfiguriert sind, die mehreren Übungsmengen zu dem zentralen Server für maschinelles Lernen zu senden (402);
- den zentralen Server (402) für maschinelles Lernen, der konfiguriert ist, ein oder mehrere Muster aus den mehreren Übungsmengen zu bestimmen.

## Revendications

1. Procédé pour permettre à une machine d'apprendre à partir de documents non structurés, le procédé comprenant les étapes consistant à :
- analyser, dans un dispositif électronique (401), une ou plusieurs bases de données structurées pour fournir une cartographie (101) entre une pluralité de chaînes de caractères référencées et une pluralité correspondante d'étiquettes de types ; dans lequel une étiquette de type indique la fonction de la signification d'une chaîne de caractères référencée correspondante ; dans lequel lesdites une ou plusieurs bases de données structurées sont des bases quelconques parmi : une base de données de carnets d'adresses, la pluralité d'étiquettes de types représentant une ou plusieurs des étiquettes suivantes : nom, prénom, nom de rue, numéro de maison, nom de ville, code de ville, nom d'état, nom de pays, numéro de téléphone, adresse e-mail ; une base de données de calendrier, la pluralité d'étiquettes de types représentant une ou plusieurs des étiquettes suivantes : date, temps, année, mois, jour, heure, minute, rendez-vous, réunion, date de naissance, anniversaire ; une base de données de tâches, la pluralité d'étiquettes de types représentant une ou plusieurs des étiquettes suivantes : tâche, date, temps, priorité ; ou encore une structure de fichiers, la pluralité d'étiquettes de types représentant une ou plusieurs étiquettes parmi les suivantes : nom de classeur, nom de fichier, lecteur de stockage, URL ;
- fournir (101), au niveau du dispositif électronique (401), un premier document non structuré comprenant une pluralité de chaînes de caractères non structurées ;
- analyser, au niveau du dispositif électronique, le premier document non structuré pour identifier (103) une première chaîne de caractères parmi la pluralité de chaînes de caractères non structurées, qui est associée à une première chaîne de caractères référencée de la pluralité de chaînes de caractères référencées ;
- annoter (104), au niveau du dispositif électronique, à l'intérieur du premier document non structuré, la première chaîne de caractères avec une première étiquette de type qui est cartographiée vers la première chaîne de caractères référencée, indiquant ainsi la signification ou la fonction de la première chaîne de caractères ;
- remplacer (105), au niveau du dispositif électronique, la première chaîne de caractères à l'intérieur du premier document non structuré par la première étiquette de type ;
- déterminer, au niveau du dispositif électronique, un jeu d'entraînement pour apprentissage de la machine avec le premier document non structuré comprenant la première étiquette de type au lieu de la première chaîne de caractères ;
- déterminer (202), au niveau d'un serveur central d'apprentissage de machine, un motif à partir du jeu d'entraînement ; dans lequel le motif est une règle de syntaxe définissant une relation de syntaxe entre la première étiquette de type et la première chaîne de caractères ;
- fournir, au niveau du dispositif électronique, un second document non structuré ;
- appliquer (303), au niveau du dispositif électronique, le motif et la pluralité de chaînes de caractères référencées au second document non structuré pour déterminer une nouvelle chaîne de caractères référencée et une étiquette de type correspondante ; et
- stocker, au niveau du dispositif électronique, la nouvelle chaîne de caractères référencée à l'intérieur desdites une ou plusieurs bases de données structurées en accord avec son étiquette de type correspondante, en produisant ainsi une pluralité étendue de chaînes de caractères référencées.

2. Procédé selon la revendication 1, comprenant en outre les étapes consistant à :
- transmettre (106) le jeu d'entraînement au serveur central d'apprentissage de machine ;
- déterminer (202) le motif au niveau du serveur central d'apprentissage de machine ; et
- transmettre (301) le motif au dispositif électronique (401).

3. Procédé selon l'une quelconque des revendications précédentes, dans lequel la fonction exécutée sur lesdites une ou plusieurs chaînes de caractères est une fonction quelconque parmi :
- une fonction de similarité appliquée à une chaîne de caractères, indiquant que la règle de syntaxe s'applique à des variantes d'un degré prédéterminé de similarité à la chaîne de caractères à laquelle la fonction de similarité est appliquée ; et
- une fonction OU exécutée sur une pluralité de chaînes de caractères, indiquant que la règle de syntaxe s'applique à l'une quelconque ou à plusieurs de la pluralité de chaînes de caractères.

4. Procédé selon l'une quelconque des revendications précédentes, comprenant en outre les étapes consistant à :
- déterminer une fréquence d'occurrence de la nouvelle chaîne de caractères référencée à l'intérieur du second document non structuré ;
- stocker la nouvelle chaîne de caractères référencée à l'intérieur desdites une ou plusieurs bases de données structurées uniquement si la fréquence d'occurrence excède une valeur seuil prédéterminée.

5. Procédé selon l'une quelconque des revendications précédentes, comprenant en outre :
- la répétition de l'étape d'application en utilisant la pluralité étendue de chaînes de caractères référencées.

6. Procédé selon l'une quelconque des revendications précédentes, comprenant en outre :
- l'itération de la détermination du jeu d'entraînement au niveau du dispositif électronique (401), la transmission du jeu d'entraînement au serveur central d'apprentissage de machine (402), la détermination du motif au niveau du serveur central d'apprentissage de machine (403), et la transmission du motif au dispositif électronique (404), permettant ainsi un apprentissage adaptatif de la machine.

7. Procédé selon l'une quelconque des revendications précédentes, dans lequel le dispositif électronique est un dispositif ordinateur personnel, par exemple un dispositif quelconque parmi : smartphone, notebook, ordinateur de bureau, téléphone mobile, ordinateur dit tablet.

8. Procédé selon l'une quelconque des revendications précédentes, dans lequel le premier document non structuré est un document quelconque ou plusieurs parmi :
- un message e-mail ;
- un document texte dans un format lisible à l'ordinateur ;
- un message provenant d'un serveur de messages courts dit "SMS".

9. Système (400) configuré pour permettre l'apprentissage d'une machine à partir de documents non structurés, le système (400) comprenant un dispositif électronique (401) configuré pour :
- analyser (101) une ou plusieurs bases de données structurées pour fournir une cartographie entre une pluralité de chaînes de caractères référencées et une pluralité correspondante d'étiquettes de type ; dans lequel une étiquette de type indique la fonction ou la signification d'une chaîne de caractères référencée correspondante ; dans lequel lesdites une ou plusieurs bases de données structurées sont des bases quelconques parmi : une base de données de carnet d'adresses, la pluralité d'étiquettes de types représentant une ou plusieurs étiquettes parmi les suivantes : nom, prénom, nom de rue, numéro de maison, nom de ville, code de ville, nom d'état, nom de pays, numéro de téléphone, adresse e-mail ; une base de données de calendrier, la pluralité d'étiquettes de types représentant une ou plusieurs étiquettes parmi les suivantes : date, temps, année, mois, jour, heure, minute, rendez-vous, réunion, date de naissance, anniversaire ; une base de données de tâches, la pluralité d'étiquettes de types représentant une ou plusieurs étiquettes parmi les suivantes : tâche, date, temps, priorité ; une structure de fichier, la pluralité d'étiquettes de types représentant une ou plusieurs étiquettes parmi les suivantes : nom de classeur, nom de fichier, lecteur de stockage, URL ;
- fournir (102) un premier document non structuré comprenant une pluralité de chaînes de caractères non structurées ;
- analyser (103) le premier document non structuré pour identifier une première pluralité de chaînes de caractères parmi la pluralité de chaînes de caractères non structurées qui est associée à une première pluralité de chaînes de caractères référencées parmi la pluralité de chaînes de caractères référencées ;
- annoter (104), à l'intérieur du premier document non structuré, la première chaîne de caractères avec une première étiquette de type qui est cartographiée sur la première chaîne de caractères référencées, indiquant ainsi la signification ou la fonction de la première chaîne de caractères ;
- remplacer (105) la première chaîne de caractères à l'intérieur du premier document non structuré par la première étiquette de type ;
- déterminer un jeu d'entraînement pour apprentissage de la machine à titre de premier document non structuré comprenant la première étiquette de type au lieu de la première chaîne de caractères ;
- transmettre le jeu d'entraînement à un serveur central d'apprentissage de machine (402) pour déterminer (202) un motif à partir du jeu d'entraînement ; dans lequel le motif est une règle de syntaxe définissant une relation de syntaxe entre la première étiquette de type et la première chaîne de caractères ;
- fournir un second document non structuré ;
- appliquer (303) le motif et la pluralité de chaînes de caractères référencées au second document non structuré pour déterminer une nouvelle chaîne de caractères référencée et une étiquette de type correspondante ; et
- stocker la nouvelle chaîne de caractères référencée à l'intérieur desdites une ou plusieurs bases de données structurées en accord avec son étiquette de type correspondante, donnant ainsi une pluralité étendue de chaînes de caractères référencées.

10. Système selon la revendication 9, comprenant en outre :
- une pluralité de dispositifs électroniques (401) configurés pour déterminer une pluralité correspondante de jeux d'entraînement, et configurés pour transmettre la pluralité de jeux d'entraînement au serveur central d'apprentissage de machine (402) ;
- le serveur central d'apprentissage de machine (402) configuré pour déterminer un ou plusieurs motifs depuis la pluralité de jeux d'entraînement.
